# EUROPÄISCHE PATENTANMELDUNG

(11) **EP 1 289 090 A1**
(43) Veröffentlichungstag der Anmeldung: **05.03.2003**
(21) Anmeldenummer: 02016585.8
(22) Anmeldetag: 25.07.2002
(51) Int. Cl.: H02G 3/30, A47B 57/40

(54) **Zur Montage an einer Stütze oder Profilschiene bestimmter Ausleger**

(30) Priorität: 29.08.2001 CH 16092001
(71) Anmelder: ZURECON AG, CH-8003 Zürich (CH)
(72) Erfinder: Gerster, Max, Dr.oec., 8185 Winkel (CH)
(74) Vertreter: Kägi, Otto

(57) **Zusammenfassung**

Der zur schraubenlosen Montage an einer Stütze oder Profilschiene (1) bestimmte Ausleger besteht aus zwei im wesentlichen spiegelbildlich geformten Teilen (A, B) mit C-Profil. An der Deckfläche (12) jedes Teils ist ein Lappen (16) angeformt, der über die Seitenwand (13) und über die der Stütze oder Profilschiene (1) zugekehrte Kante (15) des C-Profils vorsteht. Durch gegenläufiges Schwenken der beiden Teile (A, B) werden die Lappen (16) in ein Loch (2a) der Stütze oder Profilschiene eingeführt, um das Stützenprofil zu beiden Seiten des Loches (2a) zu hintergreifen. Zusammengefügt, mit je übereinander liegenden Deckflächen (12) und Bodenflächen (14), bilden die Teile (A, B) ein rechteckiges Kastenprofil. Der Ausleger kann mit einer unten liegenden Strebe ergänzt werden. Die Anordnung kann schnell, ohne Werkzeug und ohne zusätzliches Montagematerial montiert werden. Sie ist vollkommen rüttelsicher.

## Beschreibung

Die Erfindung betrifft einen Ausleger, der zur Montage an einer Stütze oder Profilschiene bestimmt ist, wobei die Stütze oder Profilschiene in vertikaler Reihe angeordnete Löcher aufweist.

Solche Stützen oder Profilschienen - z.B. an einer Wand, einem Pfeiler oder von einer Decke herabhängend befestigt - sowie daran in wählbarer Höhe zu montierende Ausleger sind in vielfältiger Ausführung bekannt. Sie werden in der Gebäude-Installationstechnik z.B. zum Verlegen von Kabelbahnen usw. verwendet, aber auch zum Errichten von Warenregalen, Gestellen usw. Zunehmend kommen solche Anordnungen auch im Tunnelbau zum Einsatz, um Verkabelungen und weitere technische Ausrüstungen sachgerecht an Tunnelwänden und -Decken zu montieren. Für die Stützen werden üblicherweise Vierkant-Hohlprofilschienen, U-Profile oder sogenannte C-Profile verwendet, mit Lochreihen an einer oder an mehreren Seiten.

Die lösbare Montage der Ausleger erfolgt bisher zumeist durch Verschrauben. Dabei werden häufig spezielle, relativ kostspielige Schraubengarnituren benötigt. Vor allem erfordert die Schraubbefestigung Manipulationen mit Werkzeug und entsprechenden Zeitaufwand. Dadurch wird die Montage erheblich verteuert.

Es sind auch verschiedene Vorschläge für eine schraubenlose Auslegermontage bekannt (z.B. US-A 2,261,956, US-A-2,950,826, EP-A-0 983 736). Hierfür sind wiederum separate, insbesondere hakenförmige, kompliziert geformte Verbindungsteile erforderlich, wie auch besondere, teilweise unübliche Stützenprofile und -Lochungen. Als weiteres Problem bzw. als Schwachstelle kann sich die Krafteinleitung vom belasteten Ausleger in das Stützen- bzw. Schienenprofil erweisen.

Aufgabe der Erfindung ist es, einen Ausleger für lösbare, schraubenlose Montage vorzuschlagen, der kostengünstig hergestellt werden kann und einfach, schnell und ohne Werkzeug montierbar ist. Die Verbindung soll eine günstige Krafteinleitung bzw. Beanspruchung des Stützenmaterials gewährleisten und auch hohen Betriebsanforderungen genügen.

Diese Aufgabe wird erfindungsgemäss dadurch gelöst, dass der Ausleger zwei separate, im wesentlichen spiegelbildlich geformte Teile aufweist, die je durch ein C-förmiges Profil mit Deckfläche, Seitenwand und Bodenfläche gebildet sind, und dass an der Deckfläche jedes Teils ein über die der Stütze oder Profilschiene zugekehrte Profil-Stirnkante und die Seitenwand vorstehender Lappen angeformt ist, wobei die beiden Lappen durch entgegengesetzt gerichtete, horizontale Schwenkbewegungen der beiden Teile in ein Loch der Stütze oder Profilschiene einführbar sind, um das Stützenprofil zu beiden Seiten des Lochs zu hintergreifen, und wobei die beiden Teile zusammen mit je übereinander liegenden Deckflächen und Bodenflächen ein rechteckiges Kastenprofil bilden.

Der erfindungsgemässe Ausleger bzw. seine beiden Teile lassen sich als einfache Stanz- und Biegeteile ohne Nachbearbeitung herstellen. Die Teile können mit wenigen Handgriffen - ohne Werkzeug und ohne Verwendung von zusätzlichem Montagematerial, wie Schrauben, Haken etc. - am Profil montiert werden, wobei eine hoch belastbare Verbindung entsteht. Sie gewährleistet insbesondere auch den Funktionserhalt im Brandfall und hohe Rüttelsicherheit. Mit diesen Eigenschaften ist der erfindungsgemässe Ausleger für die Montage wie auch für den rauhen Betrieb in Tunneln besonders geeignet, wo für kilometerlange Intallationen hohe Stückzahlen benötigt werden.

Besondere und vorteilhafte Varianten der im Patentanspruch 1 definierten Erfindung sind in den abhängigen Ansprüchen angegeben. Der Ausleger kann bei Bedarf (bei grosser Ausladung bzw. für erhöhte Belastbarkeit) auf einfache Weise mit einer Strebe ergänzt werden, die ebenfalls Gegenstand der Erfindung ist.

Nachstehend wird die Erfindung anhand von Ausführungsbeispielen im Zusammenhang mit der Zeichnung näher erläutert.
- Fig. 1: zeigt perspektivisch einen an einer Stütze montierten ersten Auslegerteil;
- Fig. 2: zeigt die Anordnung analog während der Montage des zweiten Auslegerteils;
- Fig. 3: ist die Stirnansicht des an der Stütze fertig montierten Auslegers;
- Fig. 4: ist ein Schnitt durch die Stütze auf der Höhe der Linie IV-IV in Fig. 3, mit Draufsicht auf den Verbindungsbereich des Auslegers;
- Fig. 5: zeigt einen von einer Strebe unterstützten Ausleger an der Stütze montiert, in Seitenansicht und teilweise im Schnitt; und
- Fig. 6: ist ein Vertikalschnitt entlang der Linie VI-VI in Fig. 5, in etwas grösserem Massstab gezeichnet.

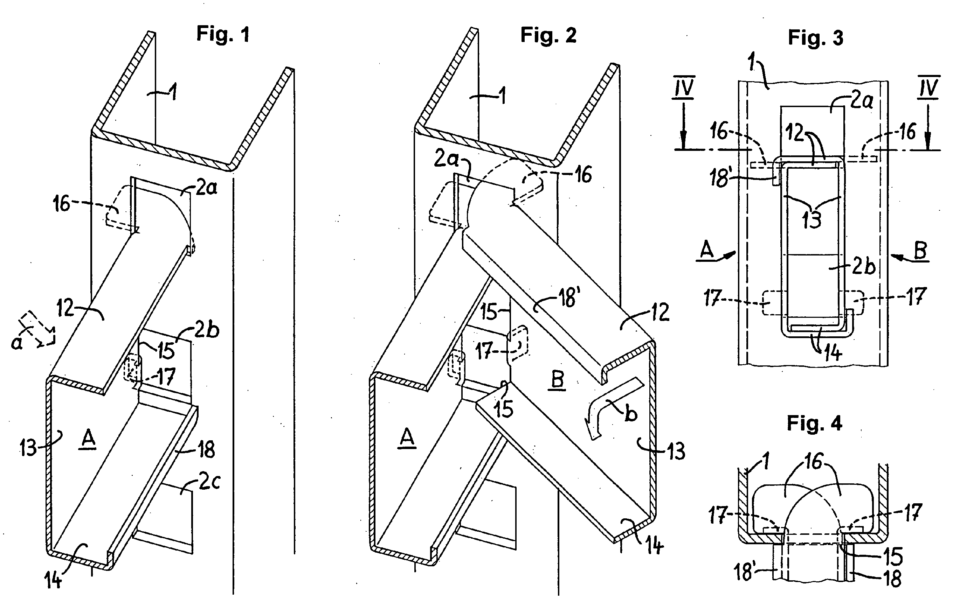

Die Fig. 1 und 2 veranschaulichen den Montagevorgang des Auslegers an einer Stütze 1 bzw. einer Profilschiene. Im Folgenden wird zuerst die Gestalt der einzelnen Teile beschrieben:

Bei der Stütze 1 handelt es sich um ein an sich bekanntes, vielseitig verwendetes Profil mit einer vertikalen Reihe von Löchern 2a, 2b, 2c usw. Anstelle des als Beispiel dargestellten U-Profils kann ohne weiteres z.B. ein Vierkant-Rohrprofil oder ein sogenanntes C-Profil (mit vier Seiten, wovon eine mit Längsschlitz) verwendet werden. Neben den quadratischen Löchern 2a, 2b, 2c.... können weitere Lochungen, wie bekannt auch an den übrigen Profilseiten, vorhanden sein.

Der an der Stütze 1 zu montierende Ausleger weist zwei Teile A und B auf, die im wesentlichen spiegelbildlich geformt sind. Es handelt sich um ein C-förmiges Profil mit jeweils einer Deckfläche 12, Seitenwand 13 und Bodenfläche 14. Vorzugsweise ist an der Bodenfläche 14 des Teil A ein Rand 18 angeformt, und ein entsprechender Rand 18' an der Deckfläche 12 des andern Teils B. Die beiden Ränder 18, 18' erstrecken sich parallel zur jeweiligen Seitenwand 13 und sind dazu bestimmt, am montierten Ausleger den jeweils anderen Teil zu übergreifen, wie aus Fig. 3 ersichtlich ist. Die Teile A und B werden üblicherweise mit Lochungen versehen, die, weil hier ohne Bedeutung, nicht dargestellt sind; beispielsweise können die Deckflächen 12 an beiden Teilen übereinstimmende Langlöcher aufweisen.

Die Deckfläche 12 jedes Teils A, B ist über die der Stütze 1 zugekehrte Stirnkante 15 des Profils hinaus erweitert und bildet einen Lappen 16, der auch über die Profil-Seitenwand 13 vorsteht. Ferner ist zweckmässigerweise, ausgehend von der genannten Stirnkante 15, an der Seitenwand 13 jedes Teils in deren unteren Bereich ein nach aussen abstehender Winkel 17 angeformt.

Die Montage des Auslegers an der Stütze 1 erfolgt mittels horizontaler Schwenkbewegungen der Teile A und B, die zueinander entgegengesetzt gerichtet sind. Zu Beginn des Schwenkens jedes Teils wird dessen Lappen 16 in das gewählte Loch 2a eingeführt, und auch der Winkel 17 greift in das untenliegende Loch 2b ein. Gemäss Fig. 1 ist der Teil A nach Ausführen der Schwenkbewegung im Sinne des Pfeils a bereits angebracht. Fig. 2 zeigt die Situation zu Beginn oder während der Schwenkbewegung des Teils B in Richtung des Pfeils b (das Schwenken der beiden Teile erfolgt vorzugsweise nacheinander, kann aber mit gewisser Übung auch gleichzeitig vorgenommen werden). Wie beim Pfeil b angedeutet, wird der Teil B entsprechend den Rändern 18, 18' in etwas angehobener Lage eingesetzt, geschwenkt und anschliessend, wenn er zum Teil A parallel liegt, abgesenkt, bis die Deckfläche 12 und die Bodenfläche 14 des Teils B auf den entsprechenden Flächen des Teils A aufliegen.

Die Fig. 3 zeigt die Anordnung bei montiertem Ausleger in Stirnansicht. Wie ersichtlich, übergreifen die Ränder 18 und 18' den jeweils anderen Teil. Beide Teile A und B zusammen bilden so ein rechteckiges Kastenprofil. Die Höhenlage des Auslegers ist durch die Auflage des (zuerst montierten, unteren) Lappens 16 des Teils A auf dem unteren Rand des Loches 2a gegeben. Die beiden Lappen 16 hintergreifen auf beiden Seiten des Loches 2a das Stützenprofil bzw. dessen vordere Wand (Fig. 4). Die Winkel 17 auf beiden Seiten des unteren Loches 2b verhindern, dass der Ausleger nach oben geschwenkt werden kann.

Eine Last auf dem Ausleger wird von beiden Teilen A und B gleichmässig aufgenommen. Die Kräfte werden einerseits über die Lappen 16 und anderseits durch die Kante 15 auf das Stützenprofil übertragen. Dadurch ergibt sich eine gut verteilte, relativ "ausgebreitete" Beanspruchung des Stützenmaterials. Vor allem werden von den Lappen Materialzonen im Bereich der Kanten des Stützenprofils belastet, und die anrissgefährdeten Eckbereiche der Löcher werden entlastet.

Die Anordnung ist im montierten Zustand vollkommen eigenstabil, d.h. sie kann - selbst bei unbelastetem Ausleger - nicht infolge von Erschütterungen oder Unachtsamkeit auseinander fallen oder aushängen. Andererseits kann der Ausleger durch willentliches Anheben und Ausschwenken des Teils B leicht wieder demontiert werden. Grundsätzlich ist auch eine Ausführung der Ausleger-Teile ohne übergreifenden Rand 18 bzw. 18' denkbar, sofern auf andere Weise für eine Verbindung oder "Verschränkung" der Teile im montierten Zustand gesorgt wird. Sowohl die Höhe als auch die Breite des Kastenprofils (Fig. 3) können in gewissen Grenzen variiert und den Anforderungen angepasst werden. Die Kastenprofil-Höhe kann über die ganze Auslegerlänge geich oder zum freien Ende hin (mit ansteigenden Bodenflächen) abnehmend sein.

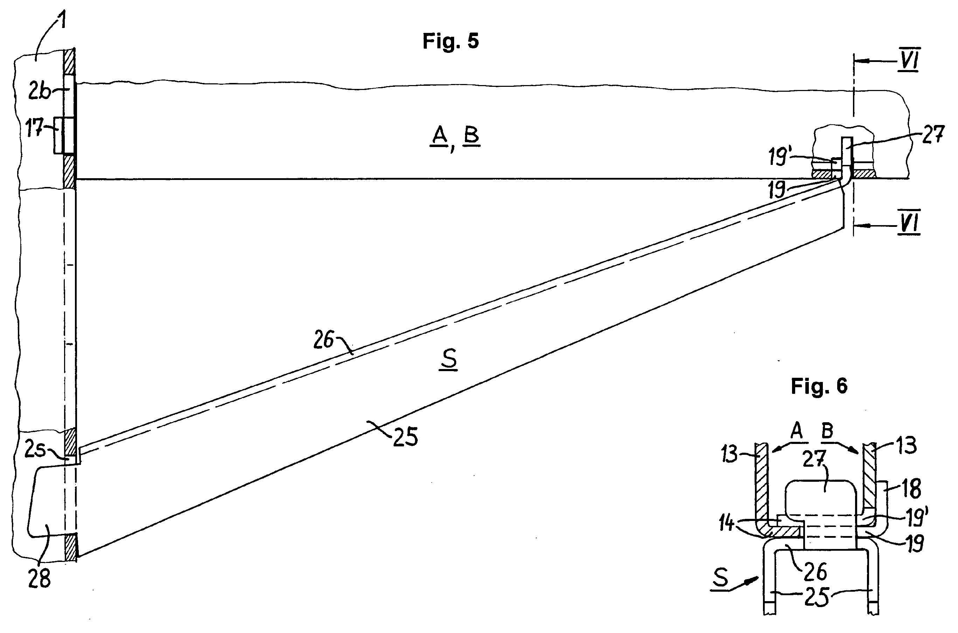

Falls notwendig, kann der Ausleger auf einfache Weise mit einer untenliegenden Strebe ergänzt und abgestützt werden, wie das Beispiel nach Fig. 5 und 6 zeigt. Die von der Stütze 1 schräg nach oben verlaufende Strebe S ist unten an einem Loch 2s der Stütze und am oberen Ende am Ausleger verankert. Diese Verankerungen sind vorzugsweise ebenfalls ohne Verwendung von Schrauben oder anderem Zusatzmaterial gestaltet.

Die dargestellte Strebe S ist als nach unten offenes U-Profil mit seitlichen Schenkeln 25 und Basis 26 ausgeführt. Stützenseitig bilden die Seitenschenkel 25 je einen Fortsatz 28 zum Eingriff in ein Stützenloch 2s und Abstützung an dessen unterem Rand. Am oberen Ende der Strebe S ist in Fortsetzung der Basisfläche 26 ein Ankerlappen 27 angeformt. Dieser ist zum Eingriff in Schlitze 19 und 19', die in den Bodenflächen 14 der Teile A und B vorgesehen sind, entsprechend abgewinkelt. Die Ausdehnung der genannten Schlitze wie auch eine zweckmässige, hakenförmige Gestalt des Ankerlappens 27 sind aus Fig. 6 ersichtlich.

Bei Verwendung der Strebe S ist für die Montage der Teile eine bestimmte Reihenfolge einzuhalten: Zuerst wird der Teil A wie oben beschrieben gemäss Fig. 1 eingesetzt. Sodann wird die Strebe S unten mit ihren Fortsätzen 28 in das Loch 2s eingesetzt, und oben wird der Ankerlappen 27 von der Seite her in den Schlitz 19 des Teils A eingeschwenkt. Schliesslich wird der Auslegerteil B gemäss Fig. 2 eingesetzt, wobei zuletzt beim Absenken der Schlitz 19' im Boden 14 von Teil B über den Lappen 27 gleitet. Indem nun gemäss Fig. 6 die Seitenwand 13 von Teil B innen neben dem Rand 18 von Teil A liegt, ist der hakenförmige Ankerlappen 27 in der Anordnung "gefangen", wenn auch mit einem gewissen, wünschbaren Spiel.

Auch diese Anordnung mit der Strebe S ist, wie ersichtlich, vollkommen rüttelsicher. Sie kann nicht durch irgendwelche Erschütterungen (z.B. Fahrwind von LKW's in Tunnels) "zerfallen", sondern nur willentlich, wieder wie oben erwähnt, zuerst durch Anheben des Teils B, demontiert werden.

## Patentansprüche

1. Zur Montage an einer Stütze oder Profilschiene (1) mit in vertikaler Reihe angeordneten Löchern (2a, 2b, 2c,....2s) bestimmter Ausleger,
**dadurch gekennzeichnet, dass** der Ausleger zwei separate, im wesentlichen spiegelbildlich geformte Teile (A, B) aufweist, die je durch ein C-förmiges Profil mit Deckfläche (12), Seitenwand (13) und Bodenfläche (14) gebildet sind,
und dass an der Deckfläche (12) jedes Teils (A, B) ein über die der Stütze oder Profilschiene (1) zugekehrte Profil-Stirnkante (15) und die Seitenwand (13) vorstehender Lappen (16) angeformt ist, wobei die beiden Lappen (16) durch entgegengesetzt gerichtete, horizontale Schwenkbewegungen der beiden Teile (A, B) in ein Loch (2a) der Stütze oder Profilschiene (1) einführbar sind, um das Stützenprofil zu beiden Seiten des Lochs (2a) zu hintergreifen, und wobei die beiden Teile (A, B) zusammen mit je übereinander liegenden Deckflächen (12) und Bodenflächen (14) ein rechteckiges Kastenprofil bilden.

2. Ausleger nach Anspruch 1, **gekennzeichnet durch** einen von der Bodenfläche (14) des einen Teils (A) und einen von der Deckfläche (12) des anderen Teils (B) ausgehenden Rand (18 bzw. 18'), welche Ränder sich parallel zur jeweiligen Seitenwand (13) erstrecken und zum Übergreifen des jeweils anderen Teils (B bzw. A) bestimmt sind.

3. Ausleger nach Anspruch 1 oder 2, **dadurch gekennzeichnet, dass** an der Seitenwand (13) jedes Teila (A, B) im unteren Bereich der der Stütze oder Profilschiene (1) zugekehrten Profil-Stirnkante (15) ein nach aussen abstehender Winkel (17) angeformt ist, der zum Eingriff in ein Loch (2b) der Stütze oder Profilschiene (1) bestimmt ist.

4. Ausleger nach einem der vorangehenden Ansprüche, **gekennzeichnet durch** eine untenliegende Strebe (S), die sich von der Stütze oder Profilschiene (1) schräg nach oben erstreckt und stützenseitig an einem Loch (2s) der Stütze oder Profilschiene (1) und andererseits am Ausleger verankert ist.

5. Ausleger nach Anspruch 4, **dadurch gekennzeichnet, dass** die Strebe (S) durch ein nach unten gekehrtes U-Profil gebildet ist und einerseits mit Fortsätzen (28) der beiden Profil-Seitenschenkel (25) in ein Loch (2s) der Stütze oder Profilschiene (1) und anderseits mit einem an der Profil-Basis (26) angeformten Ankerlappen (27) in Querschlitze (19, 19') in der Bodenfläche (14) beider Auslegerteile (A, B) eingreift.

6. Ausleger nach Anspruch 5, **dadurch gekennzeichnet, dass** der Ankerlappen (27) hakenförmig ausgebildet und nach Montage beider Auslegerteile (A, B) zwischen deren Seitenwänden (13) in den Querschlitzen (19, 19') gefangen ist.

7. Strebe (S) zur Verwendung mit dem Ausleger nach einem der Ansprüche 1 bis 3, **gekennzeichnet durch** die Merkmale eines oder mehrerer der Ansprüche 4 bis 6.
